(19) Europäisches Patentamt
European Patent Office
Office européen des brevets

(11) EP 4 265 679 A1

(12) EUROPEAN PATENT APPLICATION

(43) Date of publication:
**25.10.2023 Bulletin 2023/43**

(21) Application number: **22169239.5**

(22) Date of filing: **21.04.2022**

(51) International Patent Classification (IPC):
***C08L 23/08*** *(2006.01)* ***C08F 210/16*** *(2006.01)*
***C08F 2/00*** *(2006.01)* ***B32B 27/32*** *(2006.01)*

(52) Cooperative Patent Classification (CPC):
(C-Sets available)
B29D 7/01; **B32B 27/327; C08F 210/16; C08L 23/0815;** C08F 4/65916; C08J 5/18; C08L 2203/16; C08L 2205/02; C08L 2314/06

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **BERGER, Friedrich**
  **4021 Linz (AT)**

(74) Representative: **Borealis AG**
**Borealis Polyolefine GmbH**
**IPR-Department**
**St.-Peter-Straße 25**
**4021 Linz (AT)**

# (54) POLYMER COMPOSITION

(57) The present invention relates to a polymer composition comprising (a) 80 to 99 wt.-% based on the total weight of the polymer composition of a specific metallocene-catalysed multimodal polyethylene copolymer (MMCP) and (b) 1 to 20 wt.-% based on the total weight of the polymer composition of a specific plastomer being a copolymer of propylene and 1-butene; wherein the weight proportions of components (a) and (b) add up to 100 wt.-%. Furthermore, the present invention relates to a film comprising said polymer composition, to its use for producing the film and to the use of the film as packaging material.

EP 4 265 679 A1

(52) Cooperative Patent Classification (CPC): (Cont.)

C-Sets
**C08F 210/16, C08F 2/001;**
**C08F 210/16, C08F 4/65927;**
**C08L 23/0815, C08L 23/14;**
C08F 210/16, C08F 210/14, C08F 2500/05,
C08F 2500/12, C08F 2500/26, C08F 2500/27

## Description

The present invention relates to a polymer composition comprising (a) 80 to 99 wt.-% based on the total weight of the polymer composition of a specific metallocene-catalysed multimodal polyethylene copolymer (MMCP) and (b) 1 to 20 wt.-% based on the total weight of the polymer composition of a specific plastomer being a copolymer of propylene and 1-butene, wherein the weight proportions of components (a) and (b) add up to 100 wt.-%. Furthermore, the present invention relates to a film comprising said polymer composition, to its use for producing the film and to the use of the film as packaging material.

Polyethylenes are widely used everywhere in daily life, like packaging, due to their excellent cost / performance ratios. For environmental reasons, it is desirable to use as few of these materials as possible. One way to reduce the polyethylene material consumption is to reduce its density. Polyethylene based compositions containing plastomers to lower the density are already known in the prior art.

WO 2012/061168 (A1) relates to a sealant composition, method of producing the same, articles made therefrom, and method for forming such articles. The sealant composition comprises: (a) from 70 to 99.5 wt.-% of an ethylene/α-olefin interpolymer composition, based on the total weight of the sealant composition, wherein said ethylene/α-olefin interpolymer composition comprises an ethylene/ α-olefin interpolymer, wherein ethylene/ α-olefin interpolymer has a Comonomer Distribution Constant (CDC) in the range of from 15 to 250, and a density in the range of from 0.875 to 0.963 g/cm$^3$, a melt index (12) in a range of from 0.2 to 20 g/10 minutes, and long chain branching frequency in the range of from 0.02 to 3 long chain branches (LCB) per 1000 C; (b) from 0.5 to 30 wt.-% of a propylene/ α-olefin interpolymer composition, wherein said propylene/ α-olefin interpolymer composition comprises a propylene/ α-olefin copolymer or a propylene/ethylene/butene terpolymer, wherein said propylene/ α-olefin copolymer has a crystallinity in the range of from 1 wt.-%t to 30 wt.-%, a heat of fusion in the range of from 2 Joules/gram to 50 Joules/gram, and a DSC melting point in the range of 25°C to 110°C.

EP 0 575 465 A1 refers to heat sealable compositions suitable for film and film structures comprising: (a) from 30 to 70 wt.-% of a low melting polymer comprising an ethylene based copolymer having a density of from 0.88 g/cm$^3$ to 0.915 g/cm$^3$, a melt index of from 1.5 dg/min to 7.5 dg/min, a molecular weight distribution no greater than 3.5, and a composition distribution breath index greater than 70 %; and, (b), being different from (a), from 70 to 30 wt.-%of a propylene based polymer having from 88 mol-% to 100 mol-% propylene and from 12 mol-% to 0 mol-% of an alpha-olefin other than propylene.

WO 2021/126458 A1 refers to films comprising a core layer sandwiched between an outer layer and a sealing layer. The film has a seal initiation temperature at 5 N/15 mm between about 82°C and about 88°C, a 1 % secant modulus m MD between about 300 MPa and about 400 MPa, and plateau seal strength at between about 16 and about 17 N/15 mm. While the outer layer and core layers comprise polyethylene compositions, the sealing layer comprises a polyethylene blend. The polyethylene blend comprises a plastomer and a polyethylene composition in an amount equal to or less than 50 wt.-%.

A reduction in density generally also leads to a reduction in stiffness. It is therefore desirable to provide polyethylene-based compositions that have both low density and acceptable stiffness. Furthermore, it is an objective of the present invention to provide polymer compositions which allow to produce films with improved toughness.

These objectives have been solved by the polymer composition according to claim 1 comprising

(a) 80 to 99 wt.-% based on the total weight of the polymer composition of a metallocene-catalysed multimodal polyethylene copolymer (MMCP) having

- a density (ASTM D792) in the range of 910 to 925 kg/m$^3$;
- a $MFR_2$ (190°C, 2.16 kg, ISO 1133) in the range of 0.1 to 5.0 g/10 min; and
- a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 70; and

(b) 1 to 20 wt.-% based on the total weight of the polymer composition of a plastomer being a copolymer of propylene and 1-butene having

- a density (ASTM D792) in the range of 860 to 900 kg/m$^3$; and
- a $MFR_2$ (230°C, 2.16 kg, ISO 1133) in the range of 2.0 to 15.0 g/10 min;

wherein the weight proportions of components (a) and (b) add up to 100 wt.-%.

Advantageous embodiments of the polymer composition in accordance with the present invention are specified in the dependent claims 2 to 9. The present invention further relates in accordance with claims 10 to 13 to a film comprising

said polymer composition. Claim 14 relates to the use of the polymer composition according to the invention for manufacturing a film and claim 15 relates to the use of the film according to the invention as packaging material.

**Definitions**

A metallocene-catalysed (linear low density) polyethylene is defined in this invention as a (linear low density) polyethylene copolymer, which has been produced in the presence of a metallocene catalyst.

For the purpose of the present invention the metallocene-catalysed (linear low density) polyethylene consisting of an ethylene-1-butene polymer component (A) and an ethylene-1-hexene polymer component (B) means that the polymer is produced in an at least 2-stage sequential polymerization process, wherein first component (A) is produced and component (B) is then produced in the presence of component (A) in a subsequent polymerization step, yielding the metallocene-catalysed (linear low density) polyethylene or vice versa, i.e. first component (B) is produced and component (A) is then produced in the presence of component (B) in a subsequent polymerization step, yielding the metallocene-catalysed (linear low density) polyethylene.

The term "multimodal" in context of multimodal metallocene-catalysed (linear low density) polyethylene means herein multimodality with respect to melt flow rate (MFR) of at least the ethylene polymer components (A) and (B), i.e. the ethylene polymer components (A) and (B), have different MFR values. The multimodal metallocene-catalysed (linear low density) polyethylene can have further multimodality between the ethylene polymer components (A) and (B) with respect to one or more further properties, like density, comonomer type and/or comonomer content, as will be described later below.

Indications of Quantity

The polymer composition in accordance with the present invention mandatorily comprises the components (a) and (b) and optionally additives. The requirement applies here that the components (a) and (b) and if present the additives add up to 100 wt.-% in sum. The fixed ranges of the indications of quantity for the individual components (a) and (b) and optionally the additives are to be understood such that an arbitrary quantity for each of the individual components can be selected within the specified ranges provided that the strict provision is satisfied that the sum of all the components (a), (b) and optionally the additives add up to 100 wt.-%.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene-catalysed multimodal polyethylene copolymer (MMCP)

The polymer composition according to the present invention comprises 80 to 99 wt.-% based on the total weight of the polymer composition of a specific metallocene-catalysed multimodal polyethylene copolymer (MMCP).

Said specific copolymer (MMCP) has a density (ASTM D792) in the range of 910 to 925 kg/$m^3$, a $MFR_2$ (190°C, 2.16 kg, ISO 1133) in the range of 0.1 to 5.0 g/10 min and a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 70.

Preferred embodiments of the copolymer (MMCP) are described below.

According to one preferred embodiment in accordance with the present invention the metallocene-catalysed multimodal polyethylene copolymer (MMCP) (a) consists of an ethylene polymer component (A), preferably being a copolymer of ethylene with 1-butene, which more preferably consists of an ethylene polymer fraction (A-1) and an ethylene polymer fraction (A-2) and an ethylene polymer component (B), preferably being a copolymer of ethylene and 1-hexene.

In case that the ethylene-1-butene polymer component (A) consists of ethylene polymer fractions (A-1) and (A-2), the $MFR_2$ of the ethylene polymer fractions (A-1) and (A-2) may be the same different from each other.

In a preferred embodiment the $MFR_2$ of the ethylene polymer components (A) and (B) are different from each other.

It is furthermore preferred that the total amount of 1-butene based on the MMCP is in the range of 0.1 to 1.5 wt.-%, more preferably 0.2 to 1.3 wt.-% and still more preferably 0.4 to 1.2 wt.-% or 0.4 to 0.6 wt.-%, and/or the total

amount of 1-hexene based on the MMCP preferably is in the range of 2.0 to 20.0 wt.-%, more preferably 4.0 to 18.0 wt.-% and still more preferably 6.0 to 15.0 wt.-% or 6.0 to 8.0 wt.-%.

Still another preferred embodiment in accordance with the present invention stipulates that the metallocene-catalysed multimodal polyethylene copolymer (MMCP) has a total amount of 1-butene in the ethylene polymer component (A) in the range of 0.5 to 5.0 wt.-%, preferably of 0.6 to 4.0 wt.-%, more preferably of 0.8 to 3.0 wt.-% and even more preferably of 1.0 to 2.0 wt.-%, based on the ethylene polymer component (A).

In a further preferred embodiment in accordance with the present invention the total amount of 1-hexene in the ethylene polymer component (B) of MMCP is in the range of 3.0 to 25.0 wt.- %, preferably of 4.0 to 22.0 wt.-% and more preferably of 4.5 to 5.5 wt.-% or 10 to 15.0 wt.-%, based on the ethylene polymer component (B).

The comonomer type for the polymer fractions (A-1) and (A-2) is the same, thus both fractions have 1-butene as comonomer.

The comonomer content of component (A) and (B) can be measured, or, in case, and preferably, one of the components is produced first and the other thereafter in the presence of the first produced in a so called multistage process, then the comonomer content of the first produced component, e.g. component (A), can be measured and the comonomer content of the other component, e.g. component (B), can be calculated according to following equation:

Comonomer content (mol-% or wt.-%) in component B = (comonomer content (mol-% or wt.-%) in final product – (weight fraction of component A * comonomer content (mol-% or wt.-%) in component A)) / (weight fraction of component B).

According to another preferred embodiment according to the present invention MMCP has a $MFR_2$ (190°C, 2.16 kg, ISO 1133) of the ethylene polymer fraction (A-1) in the range of 1.0 to 15.0 g/10 min or 100 to 140 g/10 min, preferably of 1.5 to 13.0 g/10 min or 110 to 130 g/10 min, more preferably of 2.0 to 11.0 g/10 min or 115 to 125 g/10 min and even more preferably of 2.0 to 4.0 g/10 min or 117 to 124 g/10 min.

Still another preferred embodiment in accordance with the present invention stipulates that MMCP has a $MFR_2$ (190°C, 2.16 kg, ISO 1133) of the ethylene polymer fraction (A-2) in the range of 2.0 to 30.0 g/10 min or 100 to 140 g/10 min, preferably of 2.5 to 20.0 g/10 min or 110 to 130 g/10 min and more preferably of 8.0 to 15.0 g/10 min or 115 to 125 g/10 min.

In a further preferred embodiment in accordance with the present invention the metallocene-catalysed multimodal polyethylene copolymer (MMCP) has a $MFR_2$ (190°C, 2.16 kg, ISO 1133) of ethylene polymer component (A) in the range of 2.0 to 30 g/10 min or 100 to 140 g/10 min, preferably of 2.5 to 20 g/10 min or 110 to 130 g/10 min, more preferably of 3.0 to 15 g/10 min or 115 to 128 g/10 min and even more preferably of 3.2 to 10 g/10 min or 120 to 125 g/10 min.

Still another preferred embodiment in accordance with the present invention stipulates that the metallocene-catalysed multimodal polyethylene copolymer (MMCP) has a $MFR_2$ (190°C, 2.16 kg, ISO 1133) of ethylene polymer component (B) in the range of 0.01 to 1.5 g/10 min, preferably of 0.05 to 1.2 g/10 min, more preferably of 0.1 to 1.0 g/10 min and even more preferably of 0.2 to 0.7 g/10 min.

According to another preferred embodiment according to the present invention MMCP has a ratio of the $MFR_2$ (190°C, 2.16 kg, ISO 1133) of ethylene polymer component (A) to the $MFR_2$ (190°C, 2.16 kg, ISO 1133) of MMCP in the range of 2.5 to 20.0, preferably of 3.0 to 15.0 and more preferably of 3.5 to 10.0.

In a further preferred embodiment in accordance with the present invention the metallocene-catalysed multimodal polyethylene copolymer (MMCP) has a density (ASTM D792) of the ethylene polymer component (A) in the range of 920 to 950 $kg/m^3$, preferably of 925 to 950 $kg/m^3$, more preferably of 930 to 945 $kg/m^3$.

Still another preferred embodiment in accordance with the present invention stipulates that the metallocene-catalysed multimodal polyethylene copolymer (MMCP) has a density (ASTM D792) of the ethylene polymer component (B) in the range of 880 to 915 $kg/m^3$, preferably of 885 to 910 $kg/m^3$, and more preferably of 890 to 905 $kg/m^3$.

According to another preferred embodiment according to the present invention MMCP has a density (ASTM D792) of the polymer fraction (A-1) in the range of 920 to 960 $kg/m^3$, preferably of 925 to 955 $kg/m^3$, more preferably of 930 to 950 $kg/m^3$.

In still another preferred embodiment according to the present invention MMCP has a density (ASTM D792) of the polymer fraction (A-2) in the range of 930 to 950 $kg/m^3$, preferably of 935 to 945 $kg/m^3$.

The density of polymer fraction (A-1) and (A-2) may be the same or may be different from each other.

In a further preferred embodiment in accordance with the present invention the metallocene-catalysed multimodal polyethylene copolymer (MMCP) has a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 40, preferably of 24 to 35 and more preferably of 27 to 32.

According to another preferred embodiment according to the present invention MMCP has a content of component (A) in the metallocene-catalysed multimodal polyethylene copolymer (MMCP) which is in the range of 30 to 70

wt.-% based on the weight of MMCP, preferably in the range of 35 to 50 wt.-% and more preferably in the range of 38 to 45 wt.-%.

In still another preferred embodiment according to the present invention MMCP has a content of component (B) in the metallocene-catalysed multimodal polyethylene copolymer (MMCP) which is in the range of 30 to 70 wt.-% based on the weight of MMCP, preferably in the range of 50 to 65 wt.-% and more preferably in the range of 55 to 62 wt.-%.

Still another preferred embodiment in accordance with the present invention stipulates that the content of component (A1) in the metallocene-catalysed multimodal polyethylene copolymer (MMCP) is in the range of 10 to 30 wt.-% based on the weight of MMCP, preferably in the range of 12 to 25 wt.-% and more preferably in the range of 15 to 20 wt.-%.

According to another preferred embodiment according to the present invention MMCP has a content of component (A2) in the metallocene-catalysed multimodal polyethylene copolymer (MMCP) which is in the range of 10 to 30 wt.-% based on the weight of MMCP, preferably in the range of 12 to 25 wt.-% and more preferably in the range of 17 to 22 wt.-%.

Another preferred embodiment according to the present invention stipulates that the metallocene-catalysed multimodal polyethylene copolymer (MMCP) has a density (ASTM D792) in the range of 912 to 922 kg/$m^3$ and preferably in the range of 915 to 919 kg/$m^3$.

According to still another preferred in according to the present invention the $MFR_2$ (190°C, 2.16 kg, ISO 1133) of the multimodal copolymer (MMCP) is in the range of 0.2 to 4.0 g/10 min and preferably 0.8 to 1.2 g/10 min.

Naturally, in addition to multimodality with respect to, i.e. difference between, the $MFR_2$ of ethylene polymer components (A) and (B), the multimodal PE of the invention can also be multimodal e.g. with respect to one or both of the two further properties: multimodality with respect to, i.e. difference between, the comonomer content(s) present in the ethylene polymer components (A) and (B); and/or the density of the ethylene polymer components (A) and (B).

Preferably, the multimodal copolymer (MMCP) is further multimodal with respect to the comonomer content of the ethylene polymer components (A) and (B).

Even more preferably the multimodal polymer (MMCP) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The metallocene catalysed multimodal copolymer (MMCP) is preferably a linear low density polyethylene (LLDPE) which has a well known meaning.

More preferably the multimodal copolymer (MMCP) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

The multimodal copolymer (MMCP) furthermore may have a molecular weight distribution (Mw/Mn) determined with GPC in the range of at least 3.5 up to 7.2, preferably in the range of 4.0 to 7.0 and more preferably in the range of 4.5 to 6.8.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The metallocene-catalysed multimodal copolymer (MMCP), can be produced in a 2-stage process, preferably comprising a slurry reactor (loop reactor), whereby the slurry (loop) reactor is connected in series to a gas phase reactor (GPR), whereby the ethylene polymer component (A) is produced in the loop reactor and the ethylene polymer component (B) is produced in GPR in the presence of the ethylene polymer component (A) to produce the multimodal copolymer (MMCP).

In case that the ethylene component (A) of the multimodal copolymer (MMCP) consists of ethylene polymer fractions (A-1) and (A-2), the multimodal copolymer (MMCP) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273 A1, WO 2021/009189 A1, WO 2021/009190 A1, WO 2021/009191 A1 and WO 2021/009192 A1. Full details of how to prepare suitable metallocene-catalysed multimodal copolymer (MMCP) can be found in these references.

The metallocene-catalysed multimodal copolymer (MMCP) is produced by using a metallocene catalyst. The metallocene catalyst preferably comprises a metallocene complex and a cocatalyst. The metallocene compound or

complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

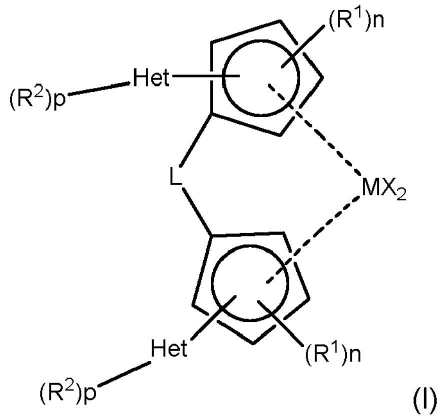

(I)

wherein each X is independently a halogen atom, a $C_{1-6}$-alkyl group, $C_{1-6}$-alkoxy group, phenyl or benzyl group;

each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl group or phenyl group optionally substituted by 1 to 3 $C_{1-6}$-alkyl groups; and
each p is 0 to 1.

Preferably, the compound of formula (I) has the structure

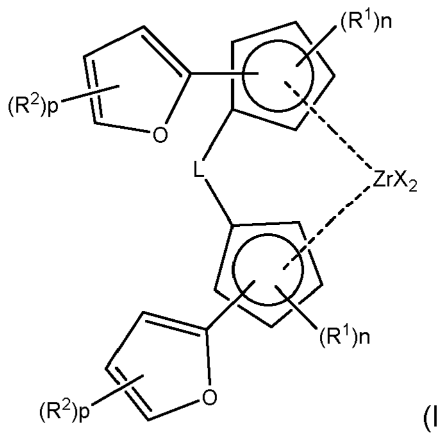

(I´)

wherein each X is independently a halogen atom, a $C_{1-6}$-alkyl group, $C_{1-6}$-alkoxy group, phenyl or benzyl group;

L is a $Me_2Si-$;

each $R^1$ is the same or different and is a $C_{1-6}$-alkyl group, e.g. methyl or t-Bu;
each n is 1 to 2;
$R^2$ is a -Si(R)$_3$ alkyl group; each p is 1;
each R is $C_{1-6}$-alkyl group or phenyl group.

Highly preferred complexes of formula (I) are

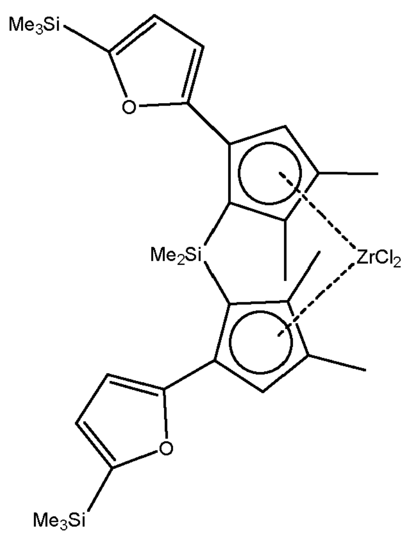

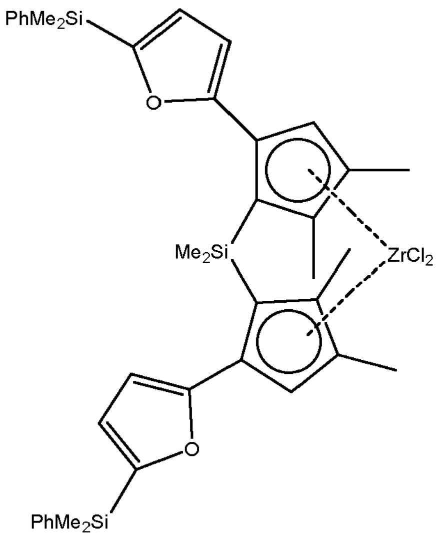

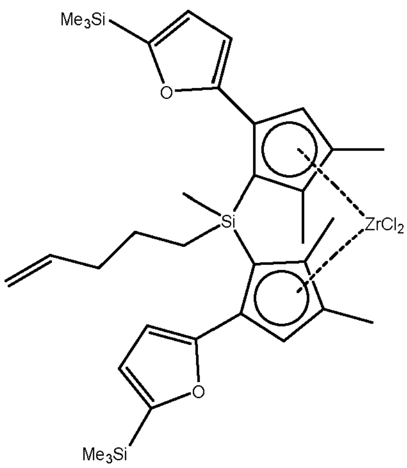

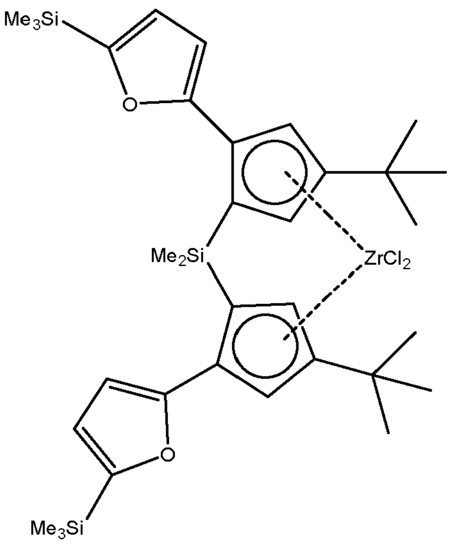

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal copolymer (MMCP) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made by using single site catalysis, as opposed to polymers made by Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

Plastomer

The polymer composition according to the present invention comprises 1 to 20 wt.-% based on the total weight of the polymer composition of a specific plastomer being a copolymer of propylene and 1-butene having a density (ASTM D792) in the range of 860 to 900 kg/$m^3$ and a $MFR_2$ (230°C, 2.16 kg, ISO 1133) in the range of 2.0 to 15.0 g/10 min.

Preferred embodiments of the plastomer are described below.

According to one preferred embodiment in accordance with the present invention the plastomer has a 1-butene content in the range of 15 to 50 wt.-% and preferably in the range of 20 to 45 wt.-% based on the total weight of the copolymer.

Still another preferred embodiment in accordance with the present invention stipulates that the plastomer has a density (ASTM D792) in the range of 870 to 890 kg/$m^3$ and preferably in the range of 880 to 888 kg/$m^3$.

In a further preferred embodiment in accordance with the present invention the plastomer has a $MFR_2$ (230°C, 2.16 kg, ISO 1133) in the range of 3.0 to 15.0 g/10 min, preferably in the range from 4.0 to 12.0 g/10 min and more preferably in the range of 6.0 to 8.0.

According to one preferred embodiment in accordance with the present invention the plastomer has a melting point (measured by DSC as described in the description) in the range of 60 to 110°C, preferably in the range of 65 to 100°C and preferably in the range of 70 to 95°C.

Still another preferred embodiment stipulates that the plastomer has a tensile modulus measured according to ASTM D638 in a range of from 50 to 450 MPa, preferably in a range of from 70 to 420 MPa and more preferably in a range of from 80 to 400 MPa.

The plastomer may further comprise minor amounts of ethylene as further comonomer not exceeding 5.0 wt% based on the plastomer. However, it is preferred that the plastomer is not containing ethylene as further comonomer.

Preferably, the plastomer is a metallocene catalyzed polymer, although Ziegler-Natta based propylene-1 -butene plastomers are also possible.

Suitable plastomers may be any copolymer of propylene and 1-butene having the above defined properties, which are commercially available e.g. under the trade Tafmer™ XM or Softell™ (LyondellBasell Polyolefine GmbH, Germany.

Alternatively, the propylene-1 -butene plastomer may be prepared by any suitable method known in the art. The skilled person will be familiar with such polymer preparation methods.

Polymer composition

The polymer composition in accordance with the present invention comprises (a) 80 to 99 wt.-% based on the total weight of the polymer composition of a specific metallocene-catalysed multimodal polyethylene copolymer (MMCP) and (b) 1 to 20 wt.-% based on the total weight of the polymer composition of a specific plastomer.

A preferred embodiment in accordance with the present stipulates that the the content of component (a) in the polymer composition is in the range of 85 to 98 wt.-% based on the total weight of the polymer composition, preferably in the range of 86 to 97 wt.-% and more preferably in the range of 89 to 96 wt.-% and that the content of component (b) in the polymer composition is in the range of 2 to 15 wt.-% based on the total weight of the polymer composition, preferably in the range of 3 to 14 wt.-% and more preferably in the range of 4 to 11 wt.-%.

The polymer composition may contain additives and fillers and the used amounts thereof are conventional. Examples of such additives are, among others, antioxidants, process stabilizers, UV-stabilizers, pigments, fillers, antistatic additives, antiblock agents, nucleating agents, acid scavengers as well as polymer processing agents (PPA).

It is understood herein that any of the additives and/or fillers can optionally be added in form of a so-called master batch, which comprises the respective additive(s) together with a carrier polymer. In such case the carrier polymer is not calculated to the polymer components of the metallocene-catalysed multimodal polyethylene copolymer (MMCP), but to the amount of the respective additive(s), based on the total amount of polymer composition (100 wt.-%).

Film

The present invention also relates to a film comprising at least one layer comprising the polymer composition according to the present invention. Said layer preferably comprises at least 90 wt.-% percent of the polymer composition based on the total weight of the layer, more preferably at least 95 wt.-% and even more preferably at least 99 wt.-% and still more preferably consists of the polymer composition.

Another preferred embodiment in accordance with the present invention stipulates that the film is a mono-layer film, preferably consisting of the polymer composition.

Still another preferred embodiment according to the present invention stipulates that the film has a Tensile Modulus in MD (ISO 527-3) in the range of 150 to 300 MPa, preferably in the range of 189 to 210 MPa.

In another preferred embodiment in accordance with the present invention the film has a Dart Drop Strength (ISO 7765-1) in the range of 500 to 2500 g, preferably in the range of 1400 to 2000 g and more preferably in the range of 1700 to 1900 g or above 1300 g.

According to still a further preferred embodiment in accordance with the present invention the film has a Relative Tear Resistance in MD (determined as described in the description) in the range of 80 to 130 N/mm, preferably in the range of 100 to 115 N/mm.

Still another preferred embodiment according to the present invention stipulates that the film has a Relative Tear Resistance in TD (determined as described in the description) in the range of 150 to 220 N/mm, preferably in the range of 180 to 200 N/mm.

Generally, the film according to the present invention can be produced by a blown film or cast film process, preferably by a blown film process. The manufacture of blown film is a well-known process.

The blown (co-)extrusion can be effected at a temperature in the range 150 to 230°C, more preferably 160 to 225°C and cooled by blowing gas (generally air) at a temperature of 10 to 40°C, more preferably 12 to 16°C to provide a frost line height of 0.5 to 4 times, more preferably 1 to 2 times the diameter of the die.

The blow up ratio (BUR) should generally be in the range of 1.5 to 3.5, preferably 2.0 to 3.0, more preferably 2.1 to 2.8.

Use

Another aspect in accordance with the present invention relates to the use of the polymer composition according to the invention for manufacturing a film.

A further aspect of the present invention refers to the use of the film as packaging material, preferably for food and/or medical products.

The invention will now be described with reference to the following non-limiting examples.

## Experimental Part

### A. Measuring methods

The following definitions of terms and determination methods apply for the above general description of the invention as well as to the below examples unless otherwise defined.

Melt Flow Rate

The melt flow rate (MFR) was determined according to ISO 1133 - Determination of the melt mass-flow rate (MFR) and melt volume-flow rate (MVR) of thermoplastics -- Part 1: Standard method and is indicated in g/10 min. The MFR is an indication of the flowability, and hence the processability, of the polymer. The higher the melt flow rate, the lower the viscosity of the polymer. The MFR of polyethylene is determined at a temperature of 190°C and may be determined at different loadings such as 2.16 kg ($MFR_2$), 5 kg ($MFR_5$) or 21.6 kg ($MFR_{21}$). The MFR the plastomers is determined at a temperature of 230°C and may be determined at different loadings such as 2.16 kg ($MFR_2$), 5 kg ($MFR_5$) or 21.6 kg ($MFR_{21}$).

Calculation of $MFR_2$ of Component B and of Fraction (A-2)

$$logA = x \cdot logB + (1-x) \cdot logC$$

$$C = 10^\wedge \frac{(logA - x.logB)}{(1-x)}$$

For Component B:

B = $MFR_2$ of Component (A)
C = $MFR_2$ of Component (B)
A = final $MFR_2$ (mixture) of multimodal polyethylene copolymer (MMCP)

X = weight fraction of Component (A)

For Fraction (A-2):

B = $MFR_2$ of 1st fraction (A-1)
C = $MFR_2$ of 2nd fraction (A-2)
A = final $MFR_2$ (mixture) of loop polymer (= Component (A))
X = weight fraction of the 1st fraction (A-1).

Density

Density of the polymer was measured according to ASTM; D792, Method B (density by balance at 23°C) on compression moulded specimen prepared according to EN ISO 1872-2 and is given in $kg/m^3$.

**DSC analysis, melting ($T_m$) and crystallization temperature ($T_c$)**

Data may be measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) were determined from the cooling step, while melting temperature ($T_m$) and melting enthalpy ($H_m$) are determined from the second heating step.

**Molecular weights, molecular weight distribution ($M_n$, $M_w$, MWD)**

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3}\ mL/g,\ \alpha_{PS} = 0.655$$

$$K_{PE} = 39 \times 10^{-3}\ mL/g,\ \alpha_{PE} = 0.725$$

A third order polynomial fit was used to fit the calibration data. All samples were prepared in the concentration range of 0,5 -1 mg/ml and dissolved at 160 °C for 3 hours for PE under continuous gentle shaking.

**Dart drop strength (DDI): Impact resistance by free-falling dart method**

The DDI was measured according to ISO 7765-1:1988 / Method A from the films as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

Standard conditions:

Conditioning time: > 96 h
Test temperature: 23 °C
Dart head material: phenolic
Dart diameter: 38 mm
Drop height: 660 mm

Results:

Impact failure weight - 50% [g]

Results:

Impact failure weight - 50% [g].

**Tensile modulus (TM)**

Tensile modulus (MPa) was measured in machine (MD) and transverse direction (TD) according to ISO 527-3 on film samples prepared as described below with a film thickness of 40 μm and at a cross head speed of 1 mm/min.

**Tear resistance (Tear)**

Tear resistance (N) was determined as Elmendorf tear in machine direction (MD) and transverse direction (TD) on film samples prepared as described below with a film thickness of 40 μm. The tear strength was measured using the ISO 6383/2 method. The force required to propagate tearing across a film sample was measured using a pendulum device. The pendulum swings under gravity through an arc, tearing the specimen from pre-cut slit. The film sample was fixed on one side by the pendulum and on the other side by a stationary clamp. The tear resistance is the force required to tear the specimen. The relative tear resistance (N/mm) was then calculated by dividing the tear resistance by the thickness of the film.

**Comonomer contents - Quantification of microstructure by NMR spectroscopy**

Quantitative nuclear-magnetic resonance (NMR) spectroscopy was used to quantify the comonomer content of the polymers.

Quantitative $^{13}C\{^{1}H\}$ NMR spectra were recorded in the molten-state using a Bruker Avance III 500 NMR spectrometer operating at 500.13 and 125.76 MHz for $^{1}H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04,

klimke06} and the RS-HEPT decoupling scheme{fillip05,griffin07}. A total of 1024 (1k) transients were acquired per spectra.

Quantitative $^{13}C\{^{1}H\}$ NMR spectra were processed, integrated and relevant quantitative properties determined from the integrals. All chemical shifts are internally referenced to the bulk methylene signal ($\delta+$) at 30.00 ppm.

The amount of ethylene was quantified using the integral of the methylene ($\delta+$) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the $_*B2$ sites at 39.8 ppm accounting for the number of reporting sites per comonomer:

$$B = I_{*B2}$$

If present the amount consecutively incorporated 1-butene in EEBBEE sequences was quantified using the integral of the $\alpha\alpha B2B2$ site at 39.4 ppm accounting for the number of reporting sites per comonomer:

$$BB = 2 * I\alpha\alpha B2B2$$

If present the amount non-of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B\ [wt\%] = 100 * (\ fB * 56.11) / (\ (fB * 56.11) + (fH * 84.16) + ((1-(fB + fH)) * 28.05)\ )$$

$$H\ [wt\%] = 100 * (\ fH * 84.16\ ) / (\ (fB * 56.11) + (fH * 84.16) + ((1-(fB + fH)) * 28.05)\ )$$

References:

Klimke, K., Parkinson, M., Piel, C., Kaminsky, W., Spiess, H.W., Wilhelm, M., Macromol. Chem. Phys. 2006; 207:382.

Parkinson, M., Klimke, K., Spiess, H.W., Wilhelm, M., Macromol. Chem. Phys. 2007; 208:2128.

Pollard, M., Klimke, K., Graf, R., Spiess, H.W., Wilhelm, M., Sperber, O., Piel, C., Kaminsky, W., Macromolecules 2004; 37:813.

Filip, X., Tripon, C., Filip, C., J. Mag. Resn. 2005, 176, 239.

Griffin, J.M., Tripon, C., Samoson, A., Filip, C., and Brown, S.P., Mag. Res. in Chem. 2007 45, S1, S198.

Castignolles, P., Graf, R., Parkinson, M., Wilhelm, M., Gaborieau, M., Polymer 50 (2009) 2373.

Busico, V., Cipullo, R., Prog. Polym. Sci. 26 (2001) 443.

Busico, V., Cipullo, R., Monaco, G., Vacatello, M., Segre, A.L., Macromoleucles 30 (1997) 6251.

Zhou, Z., Kuemmerle, R., Qiu, X., Redwine, D., Cong, R., Taha, A., Baugh, D. Winniford, B., J. Mag. Reson. 187 (2007) 225.

Busico, V., Carbonniere, P., Cipullo, R., Pellecchia, R., Severn, J., Talarico, G., Macromol. Rapid Commun. 2007, 28, 1128.

Resconi, L., Cavallo, L., Fait, A., Piemontesi, F., Chem. Rev. 2000, 100, 1253.

**B. Materials used**

**Tafmer XM-7080** is a propylene based 1-butene plastomer ($MFR_2$ (230°C/2.16kg): 7.0 g/10 min, density: 886 kg/m) commercially available as TAFMER™ XM-7080 from Mitsui Chemicals.

**MMCP** is a multimodal copolymer and was prepared as follows.

**Catalyst preparation (CAT)**

*Loading of SiO2:*

10 kg of silica (PQ Corporation ES757, calcined 600°C) was added from a feeding drum and inertized in a reactor until $O_2$ level below 2 ppm was reached.

*Preparation of MAO/tol/MC:*

30 wt.-% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 minutes. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 minutes followed by 60 minutes stirring time (oil circulation temp was set to 25°C). After stirring "dry mixture" was stabilised for 12 hours at 25°C (oil circulation temp), stirring 0 rpm. Reactor was turned 20° (back and forth) and stirring was turned on 5 rpm for few rounds once an hour. After stabilisation the catalyst was dried at 60°C (oil circulation temp) for 2 hours under nitrogen flow 2 kg/h, followed by 13 hours under vacuum (same nitrogen flow with stirring 5 rpm). Dried catalyst was sampled and HC content was measured in the glove box with Sartorius Moisture Analyser, (Model MA45) using thermogravimetric method. Target HC level was < 2 % (actual 1.3 %).

**Polymerization:**

The polymerization was carried out in a Borstar pilot plant with a 3-reactor set-up (loop 1 - loop 2 - GPR) and a prepolymerization loop reactor according to the conditions as given in Table 1.

**Table 1:** Polymerization conditions.

| **Prepoly reactor** | **MMCP** |
|---|---|
| Catalyst | CAT |
| Catalyst feed (g/h) | 32 |
| Temperature (°C) | 50 |
| Pressure (kPa) | 5606 |
| C2 (kg/h) | 4.0 |
| H2 (g/h) | 0.03 |
| C4 (g/h) | 78.8 |
| Split (wt.-%) | 3.6 |
| **loop 1 Fraction (A-1)** | |
| Temperature (°C) | 85 |
| Pressure (kPa) | 5606 |
| C2 conc. (mol-%) | 4.0 |
| H2/C2 ratio (mol/kmol) | 0.39 |
| C4/C2 ratio (mol/kmol) | 41.0 |
| Split (wt.-%) | 17.9 |
| Density (kg/$m^3$) of loop 1 material (fraction (A-1)) | 940.1 |
| $MFR_2$ (g/10 min) of loop 1 material (fraction (A-1)) | 2.2 |
| **loop 2 Fraction (A-2)** | |
| Temperature (°C) | 85 |
| Pressure (kPa) | 5535 |
| C2 conc. (mol-%) | 4.2 |
| H2/C2 ratio (mol/kmol) | 0.5 |
| C4/C2 ratio (mol/kmol) | 27 |
| Split (wt.-%) | 20.7 |
| Density (kg/$m^3$) after loop 2 (component (A)) | 940.3 |
| $MFR_2$ (g/10 min) after loop 2 (component (A)) | 4.7 |
| $MFR_2$ (g/10 min) of loop 2 material (fraction (A-2)) | 10.4 |

(continued)

| | |
|---|---|
| **loop 2 Fraction (A-2)** | |
| Density ($kg/m^3$) of loop 2 material (fraction (A-2)) | 940.5 |
| C4 (wt.-%) after loop 2 material (Component (A)) | 1.19 |
| **GPR (Component B)** | |
| Temperature (°C) | 75 |
| Pressure (kPa) | 2000 |
| H2/C2 ratio (mol/kmol) | 1.02 |
| C6/C2 ratio (mol/kmol) | 11.78 |
| Split (wt.-%) | 57.9 |
| $MFR_2$ (g/10 min) of GPR material (Component (B)) | 0.3 |
| Density ($kg/m^3$) of GPR material (Component (B)) | 900.0 |
| C6 (wt.-%) of GPR material (Component (B)) | 12.08 |

The polymer **(MMCP)** was mixed with 2400 ppm of Irganox B561 (commercially available from BASF SE) and 270 ppm of Dynamar FX 5922 (commercially available from 3M) compounded and extruded under nitrogen atmosphere to pellets by using a JSW extruder so that the SEI was 230 kWh/kg and the melt temperature 250°C. Table 2 summarizes some properties of **MMCP.**

**Table 2:** Properties of multimodal copolymer **MMCP.**

| Properties | Unit | **MMCP1** |
|---|---|---|
| $MFR_2$ | g/10 min | 1.0 |
| $MFR_5$ | | 3.1 |
| $MFR_{21}$ | g/10 min | 29.6 |
| $MFR_{21}/MFR_2$ | - | 29.6 |
| Density | $kg/m^3$ | 917.1 |
| C4 | wt.-% | 0.5 |
| C6 | wt.-% | 7.0 |

## C. Manufacturing of mono-layered films

Mono-layered films having the composition shown in Table 3 with a total thickness of 40 μm were produced on a Collin 30 lab scale blow film line (melt temperature: 210°C, BUR 1:2.5, output rate 7 kg/h).

## D. Results

**Table 3:** Composition and properties of monolayer-layered films.

| Components | Unit | CE1 | IE1 | IE2 |
|---|---|---|---|---|
| MMCP | wt.-% | 100 | 95 | 90 |
| Tafmer XM-7080 | wt.-% | - | 5 | 10 |
| Film properties | | | | |
| TM (MD) | MPa | 188 | 192 | 201 |
| DDI | g | 1290 | 1827 | 1773 |

(continued)

| Components | Unit | CE1 | IE1 | IE2 |
|---|---|---|---|---|
| Relative Tear Resistance (MD) | N/mm | 108.4 | 105.5 | 111.9 |
| Relative Tear Resistance (TD) | N/mm | 176.3 | 188.6 | 191.1 |

**E. Discussion of the results**

As can be gathered from above Table 3, the films produced from the polymer compositions according to the present invention **(IE1** and **IE2)** show a clearly improved toughness (expressed by the Dart Drop Impact Strength) whereas the stiffness (expressed by the Tensile Module and Relative Tear Resistance) is on the same level or slightly higher as for the films produced from a polymer composition without the specific plastomers **(CE1).**

**Claims**

**1.** A polymer composition comprising

(a) 80 to 99 wt.-% based on the total weight of the polymer composition of a metallocene-catalysed multimodal polyethylene copolymer (MMCP) having

• a density (ASTM D792) in the range of 910 to 925 kg/m$^3$;
• a $MFR_2$ (190°C, 2.16 kg, ISO 1133) in the range of 0.1 to 5.0 g/10 min; and
• a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 70; and

(b) 1 to 20 wt.-% based on the total weight of the polymer composition of a plastomer being a copolymer of propylene and 1-butene having

• a density (ASTM D792) in the range of 860 to 900 kg/m$^3$; and
• a $MFR_2$ (230°C, 2.16 kg, ISO 1133) in the range of 2.0 to 15.0 g/10 min;

wherein the weight proportions of components (a) and (b) add up to 100 wt.-%.

**2.** The polymer composition according to claim 1, **characterized in that**,

the metallocene-catalysed multimodal polyethylene copolymer (MMCP) (a) consists of
an ethylene polymer component (A), preferably being a copolymer of ethylene with 1-butene, which more preferably consists of an ethylene polymer fraction (A-1) and an ethylene polymer fraction (A-2); and
an ethylene polymer component (B), preferably being a copolymer of ethylene and 1-hexene; wherein preferably the total amount of 1-butene based on the MMCP is in the range of 0.1 to 1.5 wt.-%, more preferably 0.2 to 1.3 wt.-% and still more preferably 0.4 to 1.2 wt.-% or 0.4 to 0.6 wt.-%; and/or the total amount of 1-hexene based on the MMCP preferably is in the range of 2.0 to 20.0 wt.-%, more preferably 4.0 to 18.0 wt.-% and still more preferably 6.0 to 15.0 wt.-% or 6.0 to 8.0 wt.-%.

**3.** The polymer composition according to claim 2, **characterized in that**,

the metallocene-catalysed multimodal polyethylene copolymer (MMCP) has
a total amount of 1-butene in the ethylene polymer component (A) in the range of 0.5 to 5.0 wt.-%, preferably of 0.6 to 4.0 wt.-%, more preferably of 0.8 to 3.0 wt.-% and even more preferably of 1.0 to 2.0 wt.-%, based on the ethylene polymer component (A); and/or
a total amount of 1-hexene in the ethylene polymer component (B) in the range of 3.0 to 25.0 wt.-%, preferably of 4.0 to 22.0 wt.-% and more preferably of 4.5 to 5.5 wt.-% or 10 to 15.0 wt.-%, based on the ethylene polymer component (B); and/or
a $MFR_2$ (190°C, 2.16 kg, ISO 1133) of the ethylene polymer fraction (A-1) in the range of 1.0 to 15.0 g/10 min or 100 to 140 g/10 min, preferably of 1.5 to 13.0 g/10 min or 110 to 130 g/10 min, more preferably of 2.0 to 11.0

g/10 min or 115 to 125 g/10 min and even more preferably of 2.0 to 4.0 g/10 min or 117 to 124 g/10 min; and/or a $MFR_2$ (190°C, 2.16 kg, ISO 1133) of the ethylene polymer fraction (A-2) in the range of 2.0 to 30.0 g/10 min or 100 to 140 g/10 min, preferably of 2.5 to 20.0 g/10 min or 110 to 130 g/10 min and more preferably of 8.0 to 15.0 g/10 min or 115 to 125 g/10 min.

**4.** The polymer composition according to claim 2 or 3, **characterized in that**,

the metallocene-catalysed multimodal polyethylene copolymer (MMCP) has
a $MFR_2$ (190°C, 2.16 kg, ISO 1133) of ethylene polymer component (A) in the range of 2.0 to 30 g/10 min or 100 to 140 g/10 min, preferably of 2.5 to 20 g/10 min or 110 to 130 g/10 min, more preferably of 3.0 to 15 g/10 min or 115 to 128 g/10 min and even more preferably of 3.2 to 10 g/10 min or 120 to 125 g/10 min; and/or
a $MFR_2$ (190°C, 2.16 kg, ISO 1133) of ethylene polymer component (B) in the range of 0.01 to 1.5 g/10 min, preferably of 0.05 to 1.2 g/10 min, more preferably of 0.1 to 1.0 g/10 min and even more preferably of 0.2 to 0.7 g/10 min and/or
a ratio of the $MFR_2$ (190°C, 2.16 kg, ISO 1133) of ethylene polymer component (A) to the $MFR_2$ (190°C, 2.16 kg, ISO 1133) of MMCP in the range of 2.5 to 20.0, preferably of 3.0 to 15.0 and more preferably of 3.5 to 10.0.

**5.** The polymer composition according to any one of claims 2 to 4, **characterized in that**, the metallocene-catalysed multimodal polyethylene copolymer (MMCP) has

a density (ASTM D792) of the ethylene polymer component (A) in the range of 920 to 950 kg/m$^3$, preferably of 925 to 950 kg/m$^3$, more preferably of 930 to 945 kg/m$^3$; and/or
a density (ASTM D792) of the ethylene polymer component (B) in the range of 880 to 915 kg/m$^3$, preferably of 885 to 910 kg/m$^3$, and more preferably of 890 to 905 kg/m$^3$; and/or
a density (ASTM D792) of the polymer fraction (A-1) in the range of 920 to 960 kg/m$^3$, preferably of 925 to 955 kg/m$^3$, more preferably of 930 to 950 kg/m$^3$; and/or
a density (ASTM D792) of the polymer fraction (A-2) in the range of 930 to 950 kg/m$^3$, preferably of 935 to 945 kg/m$^3$;and/or
a ratio of the $MFR_{21}$ (190°C, 21.6 kg, ISO 1133) to $MFR_2$ (190°C, 2.16 kg, ISO 1133), $MFR_{21}/MFR_2$, in the range of 22 to 40; preferably of 24 to 35 and more preferably of 27 to 32.

**6.** The polymer composition according to any one of the preceding claims, **characterized in that**,

the metallocene-catalysed multimodal polyethylene copolymer (MMCP) is produced in the presence of a metallocene complex of formula (I):

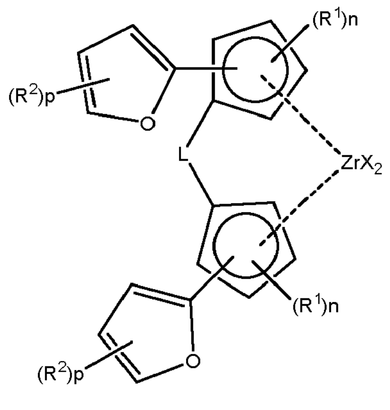

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;

each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

**7.** The polymer composition according to any one of claims 2 to 6, **characterized in that**,

the content of component (A) in the metallocene-catalysed multimodal polyethylene copolymer (MMCP) is in the range of 30 to 70 wt.-% based on the weight of MMCP, preferably in the range of 35 to 50 wt.-% and more preferably in the range of 38 to 45 wt.-%; and/or
the content of component (B) in the metallocene-catalysed multimodal polyethylene copolymer (MMCP) is in the range of 30 to 70 wt.-% based on the weight of MMCP, preferably in the range of 50 to 65 wt.-% and more preferably in the range of 55 to 62 wt.-%; and/or
the content of component (A1) in the metallocene-catalysed multimodal polyethylene copolymer (MMCP) is in the range of 10 to 30 wt.-% based on the weight of MMCP, preferably in the range of 12 to 25 wt.-% and more preferably in the range of 15 to 20 wt.-%; and/or
the content of component (A2) in the metallocene-catalysed multimodal polyethylene copolymer (MMCP) is in the range of 10 to 30 wt.-% based on the weight of MMCP, preferably in the range of 12 to 25 wt.-% and more preferably in the range of 17 to 22 wt.-%.

**8.** The polymer composition according to any one of the preceding claims, **characterized in that**,
the plastomer (b) has one or more of the following properties:

- 1-butene content in the range of 15 to 50 wt.-% and preferably in the range of 20 to 45 wt.-% based on the total weight of the copolymer; and/or
- a density (ASTM D792) in the range of 870 to 890 kg/$m^3$ and preferably in the range of 880 to 888 kg/$m^3$;and/or
- a $MFR_2$ (230°C, 2.16 kg, ISO 1133) in the range of 3.0 to 15.0 g/10 min, preferably in the range from 4.0 to 12.0 g/10 min and more preferably in the range of 6.0 to 8.0; and/or
- a melting point (measured by DSC as described in the description) in the range of 60 to 110°C, preferably in the range of 65 to 100°C and preferably in the range of 70 to 95°C.

**9.** The polymer composition according to any one of the preceding claims, **characterized in that**,

the content of component (a) in the polymer composition is in the range of 85 to 98 wt.-% based on the total weight of the polymer composition, preferably in the range of 86 to 97 wt.-% and more preferably in the range of 89 to 96 wt.-%; and
the content of component (b) in the polymer composition is in the range of 2 to 15 wt.-% based on the total weight of the polymer composition, preferably in the range of 3 to 14 wt.-% and more preferably in the range of 4 to 11 wt.-%.

**10.** A film comprising at least one layer comprising the polymer composition according to any one of claims 1 to 9.

**11.** The film according to claim 10, **characterized in that**,
the film is a mono-layer film, preferably consisting of the polymer composition according to any one of claims 1 to 9.

**12.** The film according to claim 10 or 11, **characterized in that** said film has

- a Tensile Modulus in MD (ISO 527-3) in the range of 150 to 300 MPa, preferably in the range of 189 to 210 MPa; and/or
- a Dart Drop Strength (ISO 7765-1) in the range of 500 to 2500 g, preferably in the range of 1400 to 2000 g and more preferably in the range of 1700 to 1900 g.

**13.** The film according to any of claims 10 to 12, **characterized in that** said film has

- a Relative Tear Resistance in MD (determined as described in the description) in the range of 80 to 130 N/mm, preferably in the range of 100 to 115 N/mm; and/or
- a Relative Tear Resistance in TD (determined as described in the description) in the range of 150 to 220 N/mm, preferably in the range of 180 to 200 N/mm.

**14.** Use of the polymer composition according to any one of claims 1 to 9 for manufacturing a film.

**15.** Use of the film according to any of claims 10 to 13 as packaging material, preferably for food and/or medical products.

Europäisches Patentamt
European Patent Office
Office européen des brevets

# EUROPEAN SEARCH REPORT

Application Number
EP 22 16 9239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/239561 A1 (BOREALIS AG [AT]) 3 December 2020 (2020-12-03) * the whole document * ----- | 1-15 | INV. C08L23/08 C08F210/16 C08F2/00 B32B27/32 |
| A | EP 2 172 510 A1 (DOW GLOBAL TECHNOLOGIES INC [US]) 7 April 2010 (2010-04-07) * the whole document * ----- | 1-15 | |
| A | WO 2022/018239 A1 (BOREALIS AG [AT]) 27 January 2022 (2022-01-27) * the whole document * ----- | 1-15 | |

TECHNICAL FIELDS SEARCHED (IPC)

B29D
B32B
C08F
C08L
C08J

The present search report has been drawn up for all claims

1

| Place of search | Date of completion of the search | Examiner |
|---|---|---|
| Munich | 7 September 2022 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 16 9239

This annex lists the patent family members relating to the patent documents cited in the above-mentioned European search report. The members are as contained in the European Patent Office EDP file on
The European Patent Office is in no way liable for these particulars which are merely given for the purpose of information.

07-09-2022

| Patent document cited in search report | Publication date | Patent family member(s) | Publication date |
|---|---|---|---|
| WO 2020239561 A1 | 03-12-2020 | CN 113840846 A | 24-12-2021 |
| | | EP 3976675 A1 | 06-04-2022 |
| | | US 2022251259 A1 | 11-08-2022 |
| | | WO 2020239561 A1 | 03-12-2020 |
| EP 2172510 A1 | 07-04-2010 | BR PI0913824 A2 | 13-10-2020 |
| | | CN 102227466 A | 26-10-2011 |
| | | EP 2172510 A1 | 07-04-2010 |
| | | EP 2346930 A1 | 27-07-2011 |
| | | EP 2554377 A2 | 06-02-2013 |
| | | ES 2656794 T3 | 28-02-2018 |
| | | ES 2809456 T3 | 04-03-2021 |
| | | JP 5852884 B2 | 03-02-2016 |
| | | JP 2012504685 A | 23-02-2012 |
| | | MY 174849 A | 19-05-2020 |
| | | RU 2011116767 A | 10-11-2012 |
| | | US 2011185683 A1 | 04-08-2011 |
| | | WO 2010039687 A1 | 08-04-2010 |
| WO 2022018239 A1 | 27-01-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012061168 A
- EP 0575465 A1
- WO 2021126458 A1
- WO 2016198273 A1
- WO 2021009189 A1
- WO 2021009190 A1
- WO 2021009191 A1
- WO 2021009192 A1

### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, 1, , 198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253